# EUROPEAN PATENT SPECIFICATION

(11) **EP 1 545 197 B1**
(45) Date of publication and mention of the grant of the patent: **15.11.2006**
(21) Application number: 03790974.4
(22) Date of filing: 20.08.2003
(51) Int. Cl.: A01K 85/18

(54) **FISHING LURE**
ANGELKÖDER
LEURRE DE PECHE

(30) Priority: 28.08.2002 FI 20021537; 02.12.2002 FI 20022121
(43) Date of publication of application: 29.06.2005
(73) Proprietor: Rapala Vmc Corporation, 17200 Vääksy (FI)
(72) Inventor: LEPPÄLÄ, Harri, FIN-15840 LAHTI (FI); SIIRTOLA, Juha, FIN-19110 VIERUMÄKI (FI)
(74) Representative: Haimelin, Jukka Ilmari
(86) International application number: PCT/FI2003/000614
(87) International publication number: WO 2004/019677

(56) References cited:
- US-A- 2 933 847
- US-A- 3 528 189
- US-A- 3 540 144
- US-A- 5 131 182
- US-A- 6 018 902
- US-A- 6 058 645

## Description

The present invention concerns a fishing lure, to which special features can be gained by means of a method for manufacturing thereof in accordance with the invention.

In lures of prior art, the construction generally consists of a body made as one piece or as mirror-image halves joined together, said body corresponding to the final size and shape of the lure. The material of the body is to a great extent optional, traditionally wood, and in newer constructions different plastics suitable for die-casting techniques. Elements needed for the lure like hook fastener, line fastener, swimming plate, are attached to the body.

Patterning and plating are usually made on the surface of the body piece by painting, multicolour printing and protected my means of varnishing. It is also known to use in lures constructions, in which components having influence on the appearance or operation of the lure have been inserted inside the body produced of transparent material. Especially these solutions are used when producing the body from mirror-image halves to be joined together. With this production technique the components in question can be protected against external influences.

Providing appropriate colouring and patterning inside the lure body is, however, from the point of view of the manufacturing technique, essentially more difficult than patterning and colouring of the surface of the lure body. The body halves to be made as mirror images, for example, must be concave in order to achieve an appropriate bait effect by the colouring of the inner surface. Use of printing techniques for colouring this kind of a surface is difficult. Manufacturing technique and constructional strength of the halves demands generally bracings projecting from the surface, which for its part makes the colour treatment of the surface difficult. With a lure made by using this technique the area of the patterned/coloured surface remains smaller than the outer surface of the lure body.

The colouring of the outer surface, for its part, involves problems concerning the durability of the surface. In the use of the lure the surface is influenced by many stresses, demanding great endurance of the colours and protective lacquers to be used on the surface. In practice only materials including problematic solvents can be considered. US-A-3,540,144 discloses a construction for artificial baits where the bait body is covered in tubular cover of transparent material. The cover is fabricated of a transparent plastic material so that the previous state of the material still is embedded in the material memory. The tubular cover is slid over the bait body, and subsequently the memory of the material is released. As a releasing tool may be used heat or evaporation of solvents from the material. When the memory is released the sleeve shrinks over the bait body forming a cover on it. The shrinking cover sets on the surface of the body bait and repeats any emboss on its outer surface.

An essential improvement of the problems referred to above has been achieved by means of a lure in accordance with the present invention, the characteristics of which become apparent from the enclosed claim 1.

With the present invention the lure body is substantially manufactured to its desired dimensions and shape. Required hook and line fasteners and optionally a swimming plate are attached to the body. With respect to the swimming plate it is also possible to arrange a suitable slot or other attaching facility for the swimming plate, which will not be attached to the body until the finishing phase of the lure. After that, the outer surface of the body will be patterned and coloured by means of some technique known in the art, like painting, printing or by attaching a patterned and coloured film onto the surface. With this patterning and colouring the body will be finished to a ready lure body, in other words with respect to colouring, mainly like a ready lure is supposed to look like.

In the following manufacturing phase, in accordance with the invention, a coat is provided onto the body being prepared, said coat being made of an appropriate transparent or translucence material in a die space, where the body has been inserted. Manufacturing of the coat in this die space is mainly implemented by means of a casting technique, whereby the body acts as a core. A recommended casting method is the die-casting.

Especially suitable material for manufacturing the coat of the lure in accordance with the present invention is silicon rubber. Silicon rubber in this connection stands for a two-component silicone elastomer vulcanizable in a mould. Those are known by name Liquid Silicone Rubber (LSR) and to be acquired on the market from known silicone producers like Bayer and Wacker. Silicone rubbers are well suitable to be used in die-casting techniques because of their chemical characteristics. They have suitable flow characteristics that guarantee especially easy filling of the mould and excellent gas extraction properties. The material penetrates easily for example a channel with a diameter of 0,1 mm. Thus, details of the cast having a shape of a fish, like fins, barbells and other projections can be easily produced. Compared with a lure of prior art, also a prominently thinner coating layer can be used.

Further, there is no need to use even nearly as high pressure in the die-casting process as when using other hot vulcanizable elastomers, where the pressure can be typically 200-300 bar. By using silicone rubbers the pressure can be decreased even to a half of that.

The silicone rubber is typically vulcanizable at a temperature between 150...200°C. Because there is no need to use a high pressure and a high temperature simultaneously, the materials of the core can be chosen more freely than with a technique of prior art. Also the short in-mould time speeds up the manufacturing process.

The chemical properties of the hardened silicone rubber are excellent in terms of environmental issues because of their inertia. Further, the lures in accordance with the present invention are compatible with other fishing tackle produced of silicone. Those can include softeners that are transferred from one object to another in an undesirable way.

The floating properties of silicone rubber are neutral, whereby also the swimming depth of the lure can be exactly adjusted.

Also other thermoplastic materials are usable for implementing the present invention. These are for instance ABS, PMMA, TPU and TPE. Also plastic materials that can be made fluent by means of plasticizers or alternatively plastic materials to be hardened by means of hardeners are usable, as well as the pouring cast technique using those. Especially softeners, however, include components harmful to the environment, whereby the use of this technique is less advisable.

With respect to the coat material to be cast onto the body, also its compatibility with the materials used on the surface of the body must be taken into account, additionally. A significant property of the coat material for implementing a preferred embodiment of the present invention is the bonding of the coat onto the surface material of the body.

An example of a lure in accordance with the present invention is described in enclosed drawings, wherein:
- Figure 1: is a side view of the body of a lure in accordance with the invention,
- Figure 2: is a front view of the body of Figure 1,
- Figure 3: is a side view of a swimming plate of a lure of the present invention,
- Figure 4: is a perspective view of the element shown in Figure 3,
- Figure 5: is a side view of a ready-fitted lure with its coat, and
- Figure 6: shows one embodiment of the inner construction of the body.

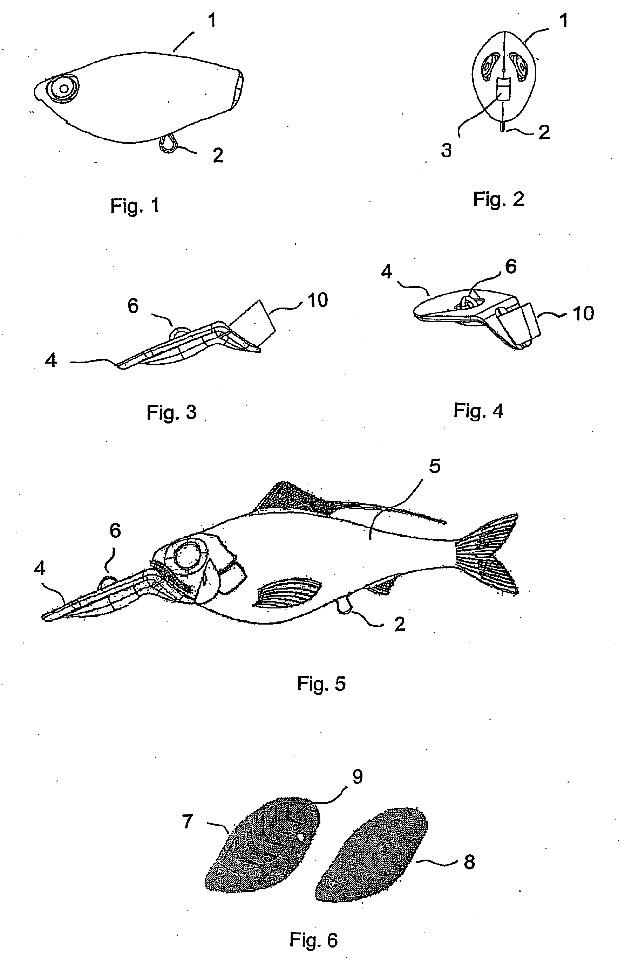

In the described embodiment, the body 1 of the lure is made into a ready bait body with respect to its outward appearance, external form and its essential equipment. The surface of the body 1 is coloured and patterned according to the desired colouring and patterning of the final lure. Eye 2 has been fastened to the body for attachment of the hook. For the swimming plate 4 (Figures 3 and 4) a suitable slot 3 has been formed to the front part of the body (figure 2), to receive the projection 10 of the swimming plate. After that the body has been inserted in a die-casting mould, the die space of said die-casting mould being slightly bigger than the body. The body 1 forms thereby the core defining the die space so that required die space is left for the thickness of the desired coat between the core and the mould. The thickness of the coat 5 to be die-cast (Figure 5) is preferably from 0,5 to 2 mm. With respect to the elements leaving outside the body, like fastening eyes, it must be taken into account that they are adequately left outside the die space.

Also the fastening slot 3 of the swimming plate 4 must be left outside the die space adequately. On the other hand, however, also a mould can be used, that for the part of the fastening slot of the swimming plate 4 has been designed so that suitable fastening elements for attaching the swimming plate to the lure after the die-cast, will be formed of the coat material onto the body slot and/or surface when die-casting the coat. Also a die-casting mould can be used, in which the swimming plate is die-cast in connection with die-casting of the coat. In the described embodiment, the eye 6 for attaching the line is placed onto the swimming plate. This eye could also be attached to the body in the same way as the hook eye 2.

The coat 5 is made of a plastic material classified hard or soft, chosen according to each purpose. With respect to the coat manufacturing it must be taken into account that it can also be made multi-layer, whereby the materials for different layers can have different properties. With materials to be used for different layers, the compatibility of the coat with the body surface can be influenced, like bonding, external properties of the lure and the visual impression of the finished lure. One thing having influence on the visual impression is associated with the refracted index of the material used for the coat. If for instance two layers of hard, clear plastic material have been used for the coat, the refraction of the light at the interface of the layers causes an effect that picks out emphasized the surface pattern and colour of the body.

The visual impression given by the ready lure can be emphasized in a lure in accordance with the invention also by shaping the surface of the body, without having any influence on the swimming properties of the lure by this shaping. Optional embossments and recesses can be formed onto the surface to be levelled off by the coat to be formed onto the surface, and the swimming surface of the lure will be smooth, if desired. Correspondingly, the coat surface can be shaped independently of the body, in case for instance a surface that causes suitable swimming vibrations is desired.

According to the present invention, further, manufacturing of the lure also makes it possible to make the coat so that materials with different properties are used on different parts of the body, for instance different material on the front portion of the lure than on the back portion thereof. The die-cast die must in that case be equipped with two material inlet points arranged in different places and, correspondingly, with separate material handling and feeding devices for both of the inlet points.

The plastic materials in question can generally be classified to belong to the following groups: thermoplastics, cold-cast plastics, mouldable resins, soft glass-clear plastics and vulcanizable materials.

One way to create different colour and light effects in a lure in accordance with the invention is to use inner constructions in the body causing the refraction of light inside the body. This kind of a "lens-effect" can be caused for instance by means of a construction shown in Figure 6. Body 1 is partly hollow and comprises two halves 7, 8. Ribs 9 give suitable stiffness to the body and, additionally, refract the light so that the lure, when it is ready, gets a tempting appearance. The form and direction of the ribs can be different from those shown in the figure. Also the inner construction of the described body can have different materials, for instance having different refractive indexes, as well as different colouring.

## Claims

1. A method for manufacturing a fishing lure, the lure comprising a body (1) manufactured at least for the part of its colouring substantially as a ready bait body, at least one hook fastener (2), and a line fastener (6) attached to the body, where the body is enclosed within a coat (5) of a transparent material, **characterized by** casting the transparent material in a die space where the bait body acts as a core.

2. The method according to claim 1; **characterized in, that** a coat (5) material is used bonding to the surface material of the body.

3. The method according to claim 1 or 2, **characterized in, that** the coat (5) is cast as multiple layers.

4. The method according to claim 3, **characterized in, that** materials having different refractive indexes are used for the different coat layers.

5. The method according to claim 3 or 4, **characterized in, that** materials having different hardness are used for the different coat layers.

6. The method according to any of the foregoing claims, **characterized in, that** a bait body (1) having an embossed surface is used.

7. The method according to any of the foregoing claims, **characterized in; that** in the die casting the coat layer (5) is formed to include elements having influence on the swimming properties of the lure.

8. The method according to any of the foregoing claims, **characterized in, that** in the die casting the coat layer (5) is equipped with elements having influence on the appearance of the lure.

9. The method according to any of the foregoing claims, **characterized in, that** a lure body (1) is used comprising an inner construction where the light is refracted.

10. The method according to claim 9, **characterized in, that** a lure body is used the inner construction of which is formed of ribs (9).

11. The method according to any of the foregoing claims, **characterized in, that** silicone rubber is used for the coat of the lure in the die casting.

## Patentansprüche

1. Verfahren zur Herstellung eines Angelköders, wobei der Köder einen Körper (1), der zumindest hinsichtlich seiner Färbung im Wesentlichen als Fertigköderkörper gefertigt ist, mindestens ein Hakenbefestigungselement (2) und ein an dem Körper befestigtes Leinenbefestigungselement (6) umfasst, wobei der Körper in einer Ummantelung (5) aus einem durchsichtigen Material eingeschlossen ist, **gekennzeichnet durch** Gießen des durchsichtigen Materials in einem Formhohlraum, in dem der Köderkörper als Kern wirkt.

2. Verfahren nach Anspruch 1, **dadurch gekennzeichnet, dass** für die Ummantelung (5) ein Material verwendet wird, das sich mit dem Material der Oberfläche des Körpers verbindet.

3. Verfahren nach Anspruch 1 oder 2, **dadurch gekennzeichnet, dass** die Ummantelung (5) in mehreren Schichten gegossen ist.

4. Verfahren nach Anspruch 3, **dadurch gekennzeichnet, dass** für die verschiedenen Schichten der Ummantelung Materialien mit unterschiedlichen Brechungsindizes verwendet werden.

5. Verfahren nach Anspruch 3 oder 4, **dadurch gekennzeichnet, dass** für die verschiedenen Schichten der Ummantelung Materialien mit unterschiedlichen Härten verwendet werden.

6. Verfahren nach einem der vorhergehenden Ansprüche, **dadurch gekennzeichnet, dass** ein Köderkörper (1) mit einer geprägten Oberfläche verwendet wird.

7. Verfahren nach einem der vorhergehenden Ansprüche, **dadurch gekennzeichnet, dass** die Ummantelungsschicht (5) beim Druckgießen so ausgebildet wird, dass sie Elemente aufweist, die Einfluss auf die Schwimmeigenschaften des Köders haben.

8. Verfahren nach einem der vorhergehenden Ansprüche, **dadurch gekennzeichnet, dass** die Ummantelungsschicht (5) beim Druckgießen mit Elementen versehen wird, die Einfluss auf das Aussehen des Köders haben.

9. Verfahren nach einem der vorhergehenden Ansprüche, **dadurch gekennzeichnet, dass** ein Köderkörper (1) verwendet wird, der eine innere Gestaltung umfasst, wo das Licht gebrochen wird.

10. Verfahren nach Anspruch 9, **dadurch gekennzeichnet, dass** ein Köderkörper verwendet wird, dessen innere Gestaltung aus Rippen (9) gebildet ist.

11. Verfahren nach einem der vorhergehenden Ansprüche, **dadurch gekennzeichnet, dass** für die Ummantelung des Köders beim Druckgießen Siliconkautschuk verwendet wird.

## Revendications

1. Procédé de fabrication d'un leurre pour la pêche, le leurre comprenant un corps (1) fabriqué au moins pour la partie de sa coloration sensiblement comme un corps d'appât prêt, au moins une pièce de fixation d'hameçon (2), et une pièce de fixation de ligne (6) fixée sur le corps, le corps étant enfermé dans un revêtement (5) en matière transparente, **caractérisé par** la coulée de la matière transparente dans une dimension de table où le corps d'appât agit comme un noyau.

2. Procédé selon la revendication 1, **caractérisé en ce qu'**une matière de revêtement (5) collant au matériau superficiel du corps est utilisée.

3. Procédé selon la revendication 1 ou 2,
**caractérisé en ce que** le revêtement (5) est coulé comme des couches multiples.

4. Procédé selon la revendication 3, **caractérisé en ce que** des matériaux ayant des indices de réfraction différents sont utilisés pour les différentes couches du revêtement.

5. Procédé selon la revendication 3 ou 4,
**caractérisé en ce que** des matériaux ayant une dureté différente sont utilisés pour les différentes couches du revêtement.

6. Procédé selon l'une quelconque des revendications précédentes, **caractérisé en ce qu'**un corps d'appât (1) ayant une surface gaufrée est utilisée.

7. Procédé selon l'une quelconque des revendications précédentes, **caractérisé en ce que** dans la coulée sous pression, la couche de revêtement (5) est formée pour inclure des éléments ayant une influence sur les propriétés de flottaison du leurre.

8. Procédé selon l'une quelconque des revendications précédentes, **caractérisé en ce que** dans la coulée sous pression, la couche de revêtement (5) est pourvue d'éléments ayant une influence sur l'aspect du leurre.

9. Procédé selon l'une quelconque des revendications précédentes, **caractérisé en ce qu'**un corps de leurre (1) comprenant une construction interne où la lumière est réfractée est utilisé.

10. Procédé selon la revendication 9, **caractérisé en ce qu'**un corps de leurre dont la construction interne est formée de nervures (9) est utilisé.

11. Procédé selon l'une quelconque des revendications précédentes, **caractérisé en ce que** du caoutchouc de silicone est utilisé pour le revêtement du leurre dans la coulée sous pression.
